(19) Europäisches Patentamt

European Patent Office

Office européen des brevets

(11) **EP 1 210 171 B1**

(12) **EUROPEAN PATENT SPECIFICATION**

(45) Date of publication and mention
of the grant of the patent:
**19.04.2006 Bulletin 2006/16**

(51) Int Cl.:
***B01J 3/06*** (2006.01)

(21) Application number: **00957768.5**

(22) Date of filing: **25.08.2000**

(86) International application number:
**PCT/US2000/023247**

(87) International publication number:
**WO 2001/014050 (01.03.2001 Gazette 2001/09)**

(54) **HIGH PRESSURE/HIGH TEMPERATURE PRODUCTION OF COLORED DIAMONDS**

HOCHTEMPERATUR/HOCHDRUCK-VERFAHREN ZUR HERSTELLUNG VON GEFÄRBTEN DIAMANTEN

PRODUCTION HAUTE PRESSION/ HAUTE TEMPERATURE DE DIAMANTS COLORES

(84) Designated Contracting States:
**AT BE CH CY DE DK ES FI FR GB GR IE IT LI LU MC NL PT SE**

(30) Priority: **25.08.1999 US 150979 P**

(43) Date of publication of application:
**05.06.2002 Bulletin 2002/23**

(60) Divisional application:
**05024773.3 / 1 645 328**

(73) Proprietor: **Diamond Innovations, Inc.
Worthington, Ohio, 46085 (US)**

(72) Inventors:
  • **ANTHONY, Thomas, Richard
    Schenectady, NY 12309-2514 (US)**
  • **VAGARALI, Suresh, Shankarappa
    Columbus, OH 43235 (US)**

(74) Representative: **Ouzman, Beverley Nicola Claire et al
    Murgitroyd and Company,
    165-169 Scotland Street
    Glasgow G5 8PL (GB)**

(56) References cited:
  **EP-A- 0 324 179          EP-A- 0 671 482
  US-A- 3 134 739          US-A- 4 124 690
  US-A- 4 174 380          US-A- 4 399 364**

• **R. M. CHRENKO ET AL.: "Transformations of the state of nitrogen in diamond" NATURE., vol. 270, 10 November 1977 (1977-11-10), pages 141-144, XP002155614 MACMILLAN JOURNALS LTD. LONDON., GB ISSN: 0028-0836**
• **T. EVANS & P. RAINEY: "CHANGES IN THE DEFECT STRUCTURE OF DIAMOND DUE TO HIGH TEMPERATURE +HIGH PRESSURE TREATMENT" PROCEEDINGS OF THE ROYAL SOCIETY OF LONDON, A., vol. 344, 1975, pages 111-130,A,B, XP000965244 london, gb cited in the application**
• **A. T. COLLINS ET AL.: "Colour changes produced in natural brown diamonds by high-pressure, high-temperature treatment" DIAMOND AND RELATED MATERIALS, vol. 9, no. 2, March 2000 (2000-03), pages 113-122, XP004195517 amsterdam, nl ISSN: 0925-9635**
• **HARLOW G.E.: 'The Nature of Diamonds', 1998, CAMBRIDGE UNIVERSITY PRESS, CAMBRIDGE (GB) * page 23 - page 47 ***
• **ORLOV YU.L.: 'The Mineralogy of the Diamond', 1977, JOHN WILEY & SONS, NEW YORK * page 144 - page 145 ***
• **NIKITIN ET AL: 'The Effect of Heat and Pressure on certain Physical Properties of Diamonds' DOKLADY AKAD NAUK SSSR vol. 182, no. 3, 1968, pages 573 - 575**
• **BROZEL M.R.; EVANS T.; STEPHENSON R.F.: 'Partial dissociation of nitrogen aggregates in diamond by high temperature-high pressure treatments' PROC. R. SOC. LONDON A vol. 361, 1978, pages 109 - 127**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**(Cont. next page)**

- **EVANS T.; QI Z.; MAGUIRE J.: 'The states of nitrogen aggregation in diamond' J. PHYS. C: SOLID STATE PHYS. vol. 14, 1981, pages L379 - L384**
- **EVANS T.; QI Z.: 'The kinetics of aggregation of nitrogen atoms in diamond' PROC. R. SOC. LONDON A vol. 381, 1982, pages 159 - 178**
- **LAWSON S.C.; KANDA H.: 'Nickal in diamond; an annealing study' DIAMOND AND RELATED MATERIALS vol. 2, 1993, pages 130 - 135**
- **LAWSON S.C.; KANDA H.: 'An annealing study of nickel point defects in high-pressure synthetic diamond' J. APPL. PHYS. vol. 73, no. 8, 1993, pages 3967 - 3973**
- **JACKSON W.E.; WEBB S.W.: 'Synthetic diamond strength enhancement through high pressure/ high temperature annealing' MAT. RES. SOC. SYMP. PROC vol. 383, 1995, pages 267 - 272**
- **WEBB S.W.; JACKSON W.E.: 'Synthetic diamond crystal strenght enhancement through annealing at 50 kbar and 1500°C' J. MATER. RES. vol. 10, no. 7, 1995, pages 1700 - 1709**
- **SCHMETZER K.: 'Behandlung natürlicher Diamanten zur Reduzierung der Gelb- oder Braunsättigung' GOLDSCHIEDE ZEITUNG vol. 97, no. 5, 1999, pages 47 - 48**

Remarks:

The file contains technical information submitted after the application was filed and not included in this specification

**Description**

BACKGROUND OF THE INVENTION

The present invention generally relates to the production of gem quality fancy neon yellow-green diamonds and more particularly to the production of these fancy gem quality diamonds from inferior-grade discolored or so-called "brown" diamonds.

Diamonds are conventionally divided into four main categories which are designated as Type Ia, Type Ib, Type IIa, and Type IIb. In reality, there is a smooth change in impurity concentration/arrangement between the four types so that intermediate varieties thereof also exist. Type I diamonds contain nitrogen as the major impurity. This category is divided into Type Ia diamonds where the nitrogen exists in an agglomerated state as either pairs called A Centers (Type IaA) or clusters of four nitrogen atoms called B centers (Type IaB) or mixtures thereof (Type IaA/B), and Type Ib where the nitrogen occurs as only isolated single nitrogen atoms called C Centers. Some diamond also contain clusters of three nitrogen atoms called N3 Centers. Over 98% of the larger clear natural diamonds are Type Ia. Type Ib diamonds are rarer and amount to only 0.8% of natural stones. Type Ia diamonds also contain platelets, which are small flat inclusions a few atoms thick and about 300 atoms across, that may contain some nitrogen in an unspecified form. Type Ia diamonds also may contain voidites which are small equiaxed cavities that are either vacant or which contain nitrogen in an unknown form. Voidites tend to be seen principally in Type IaA/B or Type IaB diamonds.

Generally, it is believed that all nitrogen-containing diamonds started out as Type Ib with isolated nitrogen atoms (C Centers) that were incorporated during crystal growth. During a long period of time (perhaps up to 1 billion years), the diamonds were annealed within earth's mantle at temperatures between 1000° and 1300° C and at high pressure. During this time, the nitrogen atoms migrated in the diamonds and principally formed two types of aggregates, namely pairs (A Centers) or clusters of four (B Centers).

$$4C \rightarrow 2A \rightarrow 1B \qquad (1)$$

It is believed that the clusters of four nitrogen atoms (B Centers) are formed when migrating nitrogen pairs (A Centers) collide with each other. Thus, the progression is believed to be Type Ib to Type IaA to Type IaA/B to Type IaB. A small amount of nitrogen may also agglomerate as N3 centers which are a planar array of three nitrogen atoms surrounding a common vacancy. It is believed that such centers are formed when an isolated nitrogen (C Center) combines with a nitrogen pair (A Center) during the agglomeration process. N3 centers apparently are less stable than A and B centers as their concentration in Type Ia diamonds is relatively small. Platelets form as soon as the annealing has progressed to the Type IaA stage. Voidite formation, as well as some platelet disintegration, occurs as B clusters form and becomes pronounced in the Type IaB stage of annealing.

Type II diamonds contain no nitrogen. Type II diamonds are further divided into Type IIa and Type IIb. Type IIa diamonds have no impurities. Type IIb diamonds contain boron in the parts per million range and are extremely rare.

The color of natural diamonds can range from clear and colorless to yellow, orange, red, blue, brown, and even green. For natural diamonds, a brownish tinge is the most common color and may occur in as many as 98% of mined natural diamonds. Type Ia diamonds containing nitrogen can be colorless if all of the nitrogen is tied up in A or B centers. However, if isolated nitrogen atoms (C Centers) or N3 centers are present, the diamonds will have a yellow tinge whose hue depends on the concentration of these forms of nitrogen atoms. Typically, the N3 centers produce the washed-out yellow that is referred to as "Cape Yellow", while isolated nitrogen atoms (C Centers) produce the richer more vibrant "Canary Yellow" if their concentration is high enough. A small amount of yellow in an otherwise colorless diamond can significantly decrease its market price. However, a rich deep yellow color can produce a "fancy" yellow that has a very high value in the marketplace.

Changing the concentration of N3 centers not only will change the yellow color of a diamond, but can increase the actual brilliance or amount of light thrown back by the diamond. The electrons around an N3 center absorb light in the ultraviolet part of the natural light spectrum, as well as blue light in the visible spectrum. In normal daylight, about 1/10 of the energy of the light is in the form of ultraviolet radiation. If the N3 concentration is relatively high, i.e., 100 ppm, then visible blue light is strongly absorbed and the diamond will have a definite yellow color, which will lower its value. However, if the concentration of N3 centers is reduced by some treatment so that the yellow coloring disappears, the remaining N3 centers can affect the brilliance of a diamond by a two-stage process. First, an ultraviolet photon is absorbed by an N3 center. The energy is temporarily stored in the N3 center. Some of this energy leaks away in the form of phonons or lattice vibrations. After a storage time pre-determined by the half-life of the center, the N3 center will re-emit the remaining energy as light. Since some energy has been lost, the re-emitted light is no longer in the high energy ultraviolet part of the spectrum. Instead, the re-emitted light now is in the visible spectrum (the technical term for this is "ultraviolet downshifting"). Because we do not see ultraviolet light, we do not notice that it is being absorbed (an animal, like a bee that can see ultraviolet light, would see the brilliance of the diamond decreased by the absorption of ultraviolet light by N3 centers). All we see is the increased emission in the visible spectrum and, thus, the diamond now appears extraordinarily bright. Consequently, a controlled reduction of N3 centers in a Type Ia diamond by any treatment will increase the value of a diamond containing them in two ways. First, elimination of some N3 centers reduces or eliminates the yellow tinge in the diamond. Second, the remaining N3 centers will increase the brilliance of the diamond relative to a perfect Type IIa diamond.

Most Type Ia diamonds as mined are of a brownish color. A brown color can result from the mixture of many other fundamental colors. One way is to mix some yellow coloring from isolated nitrogen atoms (C Centers) or N3 centers with some black color, perhaps from submicroscopic inclusions of graphite. The mixture of yellow and black will produce a brown color. Another way to make a brown diamond is to mix a color center that produces a green diamond with a color center that produces a red diamond. The combination of red and green again will produce a brown color. In fact, there are an infinite number of color combinations that will produce a brown color. Thus, it is not possible to determine the color centers causing the color of a diamond by its color. However, the reverse process is unique; that is, if one knows the type and concentration of color centers in a diamond, one can predict the resulting color.

Type II diamonds vary from colorless to a deep blue color. Type IIa diamonds are most valuable when they are colorless. Excessive mechanical deformation and plastic flow are believed to cause them to have a reddish brown or pink tinge which lowers their value considerably. Many natural Type IIa diamonds have this color tinge and their value could be greatly enhanced as jewelry if they could be made colorless. Some Type IIa diamonds have a steel gray haze in them that also greatly decreases their value. Previous attempts to treat Type II a diamonds to increase their value have failed. G. Lenzen, *Diamonds and Diamond Grading,* p. 207, Buttersworth, London (1983). Both neutron and electron irradiation followed by annealing caused Type IIa diamonds to turn brown, thereby greatly lowering the value of the diamonds.

Type IIb diamonds have a blue color that is imparted by the boron impurity. Because of the rarity of Type IIb diamonds and their attractive blue color, they have the highest value per carat as jewelry items.

In general, the pricing of diamonds is a sensitive function of their color. Fancy color diamonds, such as the canary yellows, blue, red, pink and green diamonds, are rare and have the highest prices. Because of their rarity, the market for them is not well organized and they are usually sold via a Sotheby's or Christie's type of auction. Brown diamonds are an exception to the fancy color diamond market. Brown diamonds are very common and in the past have been culled and used as industrial diamonds and are correspondingly inexpensive. After fancy color diamonds, colorless diamonds command the highest prices. The degree of colorlessness has a strong nonlinear effect on the price of the diamond. Even the faintest tinge of yellow can considerably reduce the price of colorless diamonds.

In view of the relative prices of fancy colors, colorless, and brown diamonds, there is a strong financial incentive to change brown diamonds to either colorless diamonds or to fancy color diamonds. Irradiation has been used frequently to change the color of such diamonds from unattractive off-colors to attractive blue, green, orange, black, and yellow colors. Electrons, neutrons, gamma rays, and alpha particles have been used to produce irradiation-produced color centers in diamond. Neutron, gamma, and electron irradiation are preferred because they produce a more uniform coloration of the diamond because of their good penetrating power. There is some danger in using neutrons since radioactive species can be produced in inclusions in diamonds by neutron activation. In addition, typical electron or alpha irradiation treatments only develop a superficial color confined to the outer portions of the diamond.

Essentially, all of the different types of radiation produce vacancies in diamond which are seen as the GR1 band in the visible spectrum. Absorption by the GR1 band produces a green, blue-green, dark green, or even a black color in the diamond by absorption at 740.9 nm and from 412-430 nm. Vacancy color centers can be modified by high-temperature annealing to produce colors ranging from blue to pink to red to green. Annealing can be done at temperatures as low as 600° C, because the large number of vacancies introduced by irradiation temporarily increase the mobility of nitrogen and other impurities in the diamond. Eventually, the vacancies defuse to and are absorbed by vacancy sinks, such as free surfaces, dislocations, and inclusion interfaces in the diamond. Naturally, as the vacancies disappear, their direct effect on the color of the diamond also lessens. Thus, the color gradually goes through a sequence from blue to green to brown to yellow and back to the original color of the diamond. The annealing can be stopped at any point of the annealing sequence to produce the color desired. Multiple irradiation steps and annealing steps can be done to further manipulate the color.

In recent years, people have annealed diamonds at progressively higher temperatures to try to eliminate telltale signs of irradiation in the diamond because "treated" diamonds are valued at a discount to natural diamonds. The GR1 line from the vacancy begins to disappear above 400° C as the vacancies anneal out of the crystal. Other irradiation lines, however, persist to higher temperatures. Much of the information concerning diamond irradiation and annealing treatments is kept as trade secrets by the organizations carrying out such treatments.

An example of a possibly irradiated and heat-treated greenish-yellow diamond was reported in a recent issue of *Gems & Gemology,* XXXIII, pp. 136-137, (Summer, 1997). Several one carat round brilliant stones were given to the GIA laboratory for testing. From their spectroscopic studies, GIA concluded that these diamonds had been treated. In addition, they inferred that the diamonds had been irradiated and subsequently heated to above 1450° C. Although the normal irradiation signatures, such as the GR1 line at 741 nm and the HIb and HIc lines arising from a combination of irradiation and heat treatment, were absent in these two stones, the stones did have an absorption peak in the near infrared range at 985 nm. Although the detection of treated stones is more of an art than a science, it is commonly believed that diamonds that show no absorption peaks at 595 nm, 1936 nm, and 2024 nm, have "almost certainly not been treated". J. Wilks, *et al., Properties and Applications of Diamonds,* p. 91, Buttersworth, London (1991).

Type Ia diamonds in which N3 centers give a slight yellow tinge to the crystal have been the most commonly selected stones for irradiation and annealing treatments. Electron or neutron irradiation of these stones and a subsequent heat treatment generates H3 (Nitrogen-Vacancy-Nitrogen) and H4 (Nitrogen-Nitrogen-Vacancy-Nitrogen-Nitrogen) centers which give a pleasing amber gold color to the stones when exposed to light of the visible spectrum. In addition, in UV light, the H3 Centers fluoresce a yellowish green color (E.Fritsch in "The Nature of Diamonds" by G.E.Harlow, page 35 , Cambridge University Press, (1998)). The H3 and H4 Centers, respectively, have absorption bands at 503 and 496 nm. In addition, a vacancy can combine with a single nitrogen C Center to form an H2 Center (Nitrogen-Vacancy). This H2 Center can also impart a cause a greenish color to the crystal and its optical spectra signature is a vibronic absorption band at 637.3 nm. By absorbing light in the red at 637 nm, the remaining light coming from the crystal is shifted towards a greenish color. On the CIE L*a*b color space, the color is shifting from +a (red) to -a (green).

$$V + A \rightarrow H3 \qquad (2)$$

$$V + B \rightarrow H4 \qquad (3)$$

$$V + C \rightarrow H2 \qquad (4)$$

Approximately 10% of the energy in daylight is in the form of ultraviolet rays that are invisible to the human eye. This UV light can excite otherwise invisible color centers in the diamond and cause them to luminesce or fluoresce in the visible. For white diamonds, it is generally believed that diamonds that do not luminesce are more attractive than diamonds that luminesce although this is a source of controversy. T.Mose et al, Gems & Gemology 33(4) 244 (1997); A.T. Collins, *J. Gemology,* XVIII, pp. 37-75 (1982).

Strong color luminescence in a diamond imparts a color quality that is reminiscent of a neon light, namely a glowing, ethereal type of color. Some people find this neon-like color very attractive while others do not.

Luminescence from all color centers in diamond can be suppressed by a high concentration of A Centers. If an A center is near a color center in diamond, the UV component of natural light absorbed by the center will not reradiate as fluorescence or photoluminescence. Rather the UV energy absorbed by the color center will be transferred to the A Center and undergo a non-radiative decay, i.e. an invisible decay. In other words, a lattice vibration or equivalently a phonon or heat will be emitted rather than visible light when a A Center is close to an excited color center that has absorbed UV light. Consequently, if one wants to impart a neon-like color to a crystal, the concentration of A Centers must be held below a critical maximum where all of the luminescence of the stone would be quenched. Experimentally, it is found that the luminescence decreases with increasing A Center concentration. If we take 100% to stand for the luminescence in the absence of A Centers, then 100 ppm nitrogen in A Centers will decrease the luminescence to 15% while 300 ppm of nitrogen in A Centers will decrease the luminescence to only 2.5%. If the nitrogen in A centers is less than 50 ppm (G.Davies et al, Diamond Research 1978, 18-23 (1978)), the crystal can still visibly luminesce because enough of the UV-excited color centers are isolated from A centers so that excited color centers can reradiate and luminesce rather than undergo an invisible nonradiative decay. Typical color centers that are excited by UV light include the N3 Centers and the H3 centers discussed above.

One approach that has been tried to alter the color of a natural type Ia diamond is to go to very high temperatures and pressures in the diamond stable region where nitrogen atoms are more mobile. For each 100° Centigrade increase in temperature, the mobility of nitrogen in diamond increases almost an order of magnitude. Evans, *et al., Proc Rov Soc Lond,* a 344, 111-130 (1975) and *Bonzel, et al., Proc Roy Soc Lond,* A 361, 109-127 (1978), annealed Type Ia diamonds containing nitrogen in the diamond stable region at temperatures above 1960° C under stabilizing pressures as high as 85 kilobars (kbars); i.e., in the diamond stable region. The application of pressure is necessary to keep the diamond in the diamond-stable part of the Pressure-Temperature diagram of carbon. F.P. Bundy, *Physica,* A156, 169-178 (1989). Otherwise, exposure of diamond to such high temperatures would result in the rapid graphitization of the diamond. The diamond stable phase vs the graphite stable phase is generally accepted as being defined by the Simon-Berman line. The Simon-Berman line separates the diamond and graphite stable regions on the phase/temperature (PT) plot. C.S. Kennedy and G.C. Kennedy in J. Geophysics Res, Vol. 81, pp. 2467 - 2469 (1976) define the Simon-Berman line by the equation:

$$P(kilobars) = 19.4 + 0.025T(degrees\ Centigrade).$$

Most of the diamonds that have been treated by Evans et al and Bonzel et al were of the type IaA/B, *i.e.,* they had a mixture of nitrogen clusters comprised of either nitrogen pairs(A Centers) or quadruples(B Centers) since diamonds with either pure IaA or IaB characteristics are very rare. All of the diamonds contained platelets. In the diamonds with predominantly A Center clusters, the diamonds turned a yellow color as some of the clusters broke up and formed C Centers, isolated nitrogen atoms (Type Ib). They were less successful in treating diamonds with predominantly B Centers which apparently are more stable than A Centers. The most attractive and deepest yellow colors were obtained with Type Ia diamonds at temperatures between 2250° and 2300° C and 48 kilobars of pressure (Evans *et al., supra.*).

Although Evans and co-workers achieved a successful color change, both the Type Ia and IIa diamonds crumbled into small pieces. In other words, the operation was successful but the patient died. Nothing of economic value was created and any original value of the diamonds was destroyed by the treatment. Also, the requirement to operate in the diamond stable region of the carbon PT diagram necessitates extremely high pressures at the treatment temperatures involved. Such high pressures are either currently unattainable or are not economic. As a result of their work, high-pressure and high-temperature treatments of diamond to change their color were abandoned by the diamond research community in favor of irradiation and low-temperature annealing.

BRIEF SUMMARY OF THE INVENTION

The present invention is directed to a method for treating discolored natural diamonds, especially Type IaB diamonds, Type IaA/B diamonds and Type IaA diamonds with nitrogen either as predominantly B Centers and/or with low concentrations of nitrogen in A Centers, preferably less than 100 ppm, at pressures and temperatures in the graphite stable region of the carbon pressure-temperature diagram to produce a yellow-green neon-like color in the diamond. The method includes placing a discolored natural diamond in a pressure transmitting medium; i.e., a powder which is consolidated into a pill. Next, the pill is placed into a high pressure/high temperature (HP/HT) press at elevated pressure and elevated temperature within the graphite stable or diamond stable range of the carbon phase diagram for a time sufficient to improve the color of said diamond. Finally, the diamond is recovered from the press. Neon Yellow-Green diamonds can be made by this method.

Typical temperatures range from 1500° to 3500° C with corresponding pressures ranging from 10 to 100 kilobars, and preferably from 20 to 80 kilobars. Pressing times in the HP/HT press can range from as short as about 30 seconds up to as long as 96 hours or more, with pressing times preferably ranging from 5 minutes up to 24 hours. These conditions (time, temperature, and pressure) are correlated and adjusted to the nature of the discoloring defects in the diamond which have to be altered in order to improve the color of the diamond. The HP/HT treatment removes any brown tint or coloring that may have existed in the starting diamond. Natural diamonds were typically held below the earth at temperatures ranging from 1000→ 1300 C for periods of 100 million to 3 billion years. This time period allowed single nitrogen atoms to migrate and form A, B and N3 centers. If the nitrogen concentration was high and the time period long, then the reaction shown in Equation 1 went to completion, i.e. all of the nitrogen ended up at B Centers which is the lowest energy state. If the time period was short and the temperature relatively low, then the reaction shown in Equation 1 did not go to completion and these natural diamonds may have some C Centers (Type Ib) or A centers (Type IaA) or mixtures thereof or mixtures of A and B Centers (Type IaA/B). On going to high temperatures, the mobility of nitrogen increases orders of magnitude. Also, the higher temperatures can break up stable B centers and A centers. Consequently, if one starts with a pure Type IaA diamond, after an HPHT anneal, it will contain new C and new B centers and less A centers. Similarly, a Type IaB diamond following an HPHT anneal, will contain some new A and new C Centers and fewer B Centers. Likewise, a Type Ib diamond after an HPHT anneal will contain new A and new B Centers and less C Centers. An important objective of our invention is to keep the final concentration of nitrogen in A Centers to be less than 50 ppm so that the A Centers do not quench the desired fluorescence. This can be done by selecting crystals where the total nitrogen concentration is less than 50 ppm or by selecting suitable crystals with higher nitrogen concentrations that end up with less than 50 ppm of nitrogen in A Centers after the HPHT anneal. Another object of our invention is to minimize the number of C centers in the diamond because these C Centers impart a Canary Yellow color to the diamond but not a neon-like yellowish green color. If the concentration of C Centers is much greater several ppm, the neon-like color characteristic of the H3 Centers may be swamped out by the Canary Yellow of the C Centers. The ideal starting diamonds to make Neon-like yellowish-green are Type IaB's. During the HPHT anneal, some B centers will break up to form A Centers, some of which will form H3 Centers by combining with excess vacancies during cooling. These diamonds will give us the maximum ratio of H3 to A Center concentration while minimizing the number of color diluting C Centers. Many brownish diamonds from the Argyle mine in Australia are ideal for our purpose and are available at economically attractive prices.

In addition to the rearrangement of nitrogen atoms during an HPHT anneal, vacancies are generated at high temperatures from vacancies sources in the diamond such as dislocations, external surfaces and internal surfaces so that the vacancy concentration can reach the higher concentrations dictated by thermal equilibrium at higher temperatures. The vacancy concentration Cv is given by:

$$Cv = Co \; exp \; (-Qv/RT) \qquad\qquad (5)$$

where Co is a constant, Qv is the vacancy formation energy, R is the universal gas constant and T is the absolute temperature in degrees Kelvin. Qv is estimated to be 1.6 ev. The equilibrium vacancy concentration is a monotonically increasing function of temperature. Upon cooling, a supersaturation of vacancies is created in the diamond. To reach equilibrium during cooling, excess vacancies migrate and are absorbed by vacancy sinks. In diamond, the strongest sinks are nitrogen complexes such as A, B and C centers (G.Davies et al, Phys Rev B 46, 13157-13170 (1992)). Consequently, during cooling H2, H3 and H4 centers are formed as shown above in equations 2, 3 and 4. It is known that H3 centers formed by the combination of a free vacancy with an A center fluoresce a yellowish green color (E.Fritsch in "The Nature of Diamonds" by G.E.Harlow, page 35 , Cambridge University Press, (1998)). Consequently, to develop the strongest neon-like yellowish green color, a diamond should have a high concentration of H3 centers which produce the desired fluorescence and a low concentration of A Centers which quench the fluorescence. Our HPHT treatment of suitably selected natural diamonds produces diamonds with a high concentration of H3 Centers and low concentration of A Centers.

Because the excess vacancy concentration is only a few parts per million, the concentration of A centers necessary to form H3 fluorescent Centers can be correspondingly small. Any extra A centers just quench any potential H3 fluorescence centers in their neighborhood by providing routes of nonradiative decay. Therefore, for Type IaB diamonds, the HPHT treatment of our invention can be of short duration and relatively low temperatures compared to our HPHT treatments of IIa crystals so as to minimize the conversion of B Centers to A Centers during the HPHT anneal. Conversely, for Type IaA diamonds, a longer and/or higher temperature HPHT anneal may be desirable because more A Centers will be converted to B Centers. For Type IaA/B, the best treatment will depend on the proportion of A and B Centers in the diamond. Those with a high proportion of B Centers should be treated like the IaB diamonds while those with a high proportion of A Centers should be treated like IaA diamonds.

Advantages of the present invention include the ability to upgrade the color of discolored or off-colored diamond to produce fancy neon yellow green color diamonds. Another advantage is the ability to maintain the mechanical and structural integrity of the color-improved diamonds. A further advantage is the specific ability to make neon yellowish-green diamonds from both Type Ib, Type IaA , Type IaB and Type IaA/B diamonds. A further advantage is the ability to retain the optical clarity of the treated diamonds disclosed herein. These and other advantages will be readily apparent from the disclosure set forth herein.

BRIEF DESCRIPTION OF THE DRAWINGS

For a fuller understanding of the nature and objects of the present invention, reference should be had to the following detailed description taken in connection with the accompanying drawings, wherein:

Fig. 1 is a cross-sectional view of a conventional HP/HT apparatus which may utilized to anneal discolored diamond for improving their color.; and
Fig. 2 is a cross-sectional view of a typical reaction cell for annealing natural diamond in the apparatus in Fig. 1.

DETAILED DESCRIPTION OF THE INVENTION

The present invention is illustrated in connection with a conventional HP/HT apparatus which may be of the belt- or die-type described, for example, in U.S. Pats. Nos. 2,947,611; 2,941,241; 2,941,248; 3,609.818; 3,767,371; 4,289,503; 4,673,414; and 4,954,139. However, it will be appreciated that the method of the present invention will find applicability in any HP/HT apparatus which is capable of providing the required HP and HT conditions simultaneously. Accordingly, it is intended that such other HP/HT apparatuses are within the scope of the invention herein described.

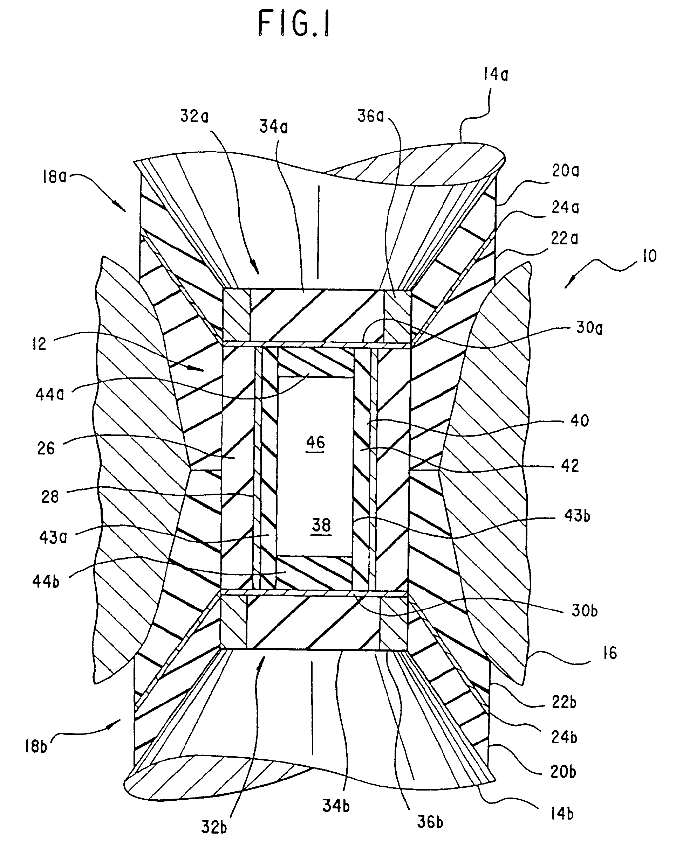

Looking then to Fig. 1, an illustrative HP/HT apparatus useful in the practice of the present invention is shown generally at 10 to comprise a generally cylindrical reaction cell assembly 12 interposed between a pair of punches, 14a and 14b, and surrounded by a generally annular belt or die member 16. Preferably, both punches 14 and belt member 16 are formed of a relatively hard material, such as cemented tungsten carbide. Between punches 14 and belt member 16 are a pair of insulating assemblies, 18a and 18b, each of which is formed of a pair of thermally- and electrically-insulating members, 20a-b and 22a-b, each preferably formed of pyrophyllite or the like, and having an intermediate metallic gasket, 24a and 24b, disposed therebetween.

As shown, reaction cell assembly 12 includes a hollow cylinder 26, which may be formed of a material, such as salt or the like, which is converted during HP/HT by phase transformation or compaction to a stronger, stiffer state or, alternatively, of a talc material or the like which is not so converted. In either case, the material of cylinder 12 is selected as being substantially free of volume discontinuities or the like, under HP/HT as may occur, for example, with pyrophyllite or alumina materials. Materials meeting such criteria are described in U.S. Pat. No. 3,030,662.

Positioned concentrically within salt cylinder 26 is an adjacent cylinder 28, which is provided as a graphite electrical resistance heater tube. Electrical connection with heater tube 28 is achieved via an adjacent pair of conductive-metal end discs, 30a and 30b, which are axially-disposed with respect to heater tube 28. Adjacent each disc 30 is provided an end cap assembly, shown generally at 32a and 32b, each of which comprises an insulating plug, 34a and 34b, surrounded by an electrically conductive ring, 36a and 36b.

It will be appreciated that the interior of heater 28, along with end discs 30, salt cylinder 26, and end cap assemblies 32, defines a generally-cylindrical inner chamber, shown at 38, having defined axial and radial extents and containing a pressure transmitting medium 40. Pressure transmitting medium 40 is selected as having a relatively low coefficient of internal friction to make it semi-fluid at HP/HT conditions, and may be provided as a cylindrical salt liner 42, which defines radial pressure transmitting medium layers 43a and 43b, and is fitted with an axial pair of salt plugs, 44a and 44b, each of which defines an axial pressure transmitting medium layer. Preferably, salt liner 42 and plugs 44 are formed of a graphite material or of sodium chloride, but also may can be formed of any chloride, iodide, or bromide of sodium, potassium, or calcium or a mixture thereof. Alternatively, pressure transmitting medium 40 may be provided in powdered or particulate form. In either case, medium 40 defines a cavity space, as is shown at 46, which is configured to receive the discolored diamond to be annealed. Such is the configuration of a representative HP/HT apparatus for practicing the present invention.

In departing from conventional uses of HP/HT apparatuses, the diamond to be annealed is placed within a powdered pressure transmitting medium which then is consolidated or densified to in excess of 90% of its theoretical density to form a pill. The pill medium must transmit hydrostatic pressure without loss as a continuum onto diamond surfaces in the HP/HT apparatus to avoid shear stresses that could plastically deform the diamond being treated. The pill medium also must be thermally and chemically stable, and preferably should not react with or cause dissolution of diamond. Suitable media are stable fluids or gases at annealing conditions or highly plastic solids, including, but not limited to, salts such as describe above, oxides such as magnesium oxide or calcium oxide, or carbons such as graphite. The pill medium also must be scaleable to the high pressures and high temperatures that are encountered with the HP/HT apparatus. Finally, the pill medium must possess a volume compressibility which is small and comparable to the gasketing system, i.e., it must be void-free and close to its theoretical lattice density at annealing conditions. Multiple pills can be housed within cavity 46 if necessary, desirable, or convenient.

Pressure conditions for the present invention comprehend conditions in the graphite stable region of the PT diagram, typically in the range of from 10 to 200 kilobars, and preferably from 20 to 80 kilobars. Temperatures employed in the practice of the present invention typically are in the range of from 1500° to 3500° C. Annealing conditions depend upon the nature of the defect in the diamond which have to be removed or changed to improve color and can readily be determined by those skilled in the art without undue experimentation. It is central to the present invention that the HP/HT conditions be within the graphite stable range of the carbon phase diagram.

HP/HT conditions are maintained for a time adequate for the color of the discolored diamond to improve. Such times can range from several minutes to several hours, preferably, from 5 minutes to 24 hours, and more preferably, from 5 minutes to 1 hour. In this regard, the discolored diamond can be subject to multiple annealing steps at the same or at different conditions, as the examples will demonstrate.

Discolored diamonds subjected to the inventive process may be cut and polished prior to annealing or following their recovery from the pill. Thereafter, the diamond is ready for use in jewelry or fabrication into devices, such as, for example, heat sinks, optical windows, or the like. Of special importance is the ability of the present invention to convert discolored Type IaB and Type IaA/B diamonds into a neon-like yellow-green stone.

The following examples show how the present invention has been practiced, but should not be construed as limiting. In this application, all units are in the metric system, unless otherwise stated.

EXAMPLES

In the examples, annealing of natural diamonds was done under high temperature and high pressure conditions using a belt type apparatus which is capable of reaching very high pressures (~60 kbars) and temperatures (~2600° C). Diamond annealing in accordance with the present invention is illustrated in the examples using the following cell arrangements and operating conditions.

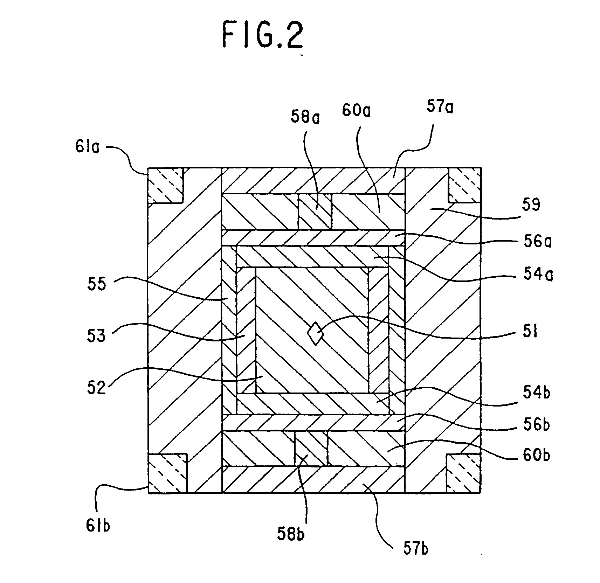

The reaction cell assembly is schematically shown in Fig. 2. Diamond crystal 51 is placed inside cylindrical pill 52 which is made of high purity graphite or sodium chloride powder. Graphite is preferred because it does not melt during high temperature annealing. Pill 52 has the following dimensions: diameter of 0.76 inches (19.3 mm) and height of 0.86 inches (21.8 mm). Pill 52 is made by compacting the graphite powder and diamond crystal 51 in a hydraulic press. Pill 52 is placed within magnesium oxide tube 53 which is fitted with end discs 54a and 54b. This assembly, then, is placed within graphite tube 55 which is fitted with end discs 56a and 56b. Such assembly is placed within salt cylinder 59 whose ends are fitted with graphite pins 58a and 58b surrounded by, respectively, salt cylinders 60a and 60b. Graphite discs 57a and 57b, respectively, seal the ends of salt cylinder 59. 61a and 61 b are rings made of ceramic material which improve the stability of the reaction cell during HP/HT run.

The reaction cell assembly then is placed inside a high pressure apparatus (such as a belt-type apparatus) using standard gasket assemblies to form a seal at high pressure and to make electrical contact with the punches so that it can be heated with electrical power.

A typical annealing run starts with the reaction cell being pressurized to a set pressure of ~60 kbars. The electrical power is turned on when the pressure reaches ~96% of the set pressure. Initially, the diamond is heated to approximately 1200° C and held at this temperature for one minute. Thereafter, the temperature is increased to the set value, e.g., approximately 2500° C, in 2.5 minutes and held at the set value for 18 minutes. The temperature should remain steady at 2500C during the last 6 minutes. Then the power is slowly reduced to nil in 1.5 minutes. The cell pressure is held constant for about 4 minutes and the pressure then slowly released. The reaction cell is removed from the HP/HT apparatus and the graphite pill containing the diamond is removed. The diamond is recovered by digesting the pill in a boiling mixture of 90% sulfuric acid and 10% nitric acid.

EXAMPLE I

A IaB type natural rough diamond containing platelets as evident by the peak at 1360 cm-1 in infrared(IR) spectrum in absorption mode, weighing 1.83 carats with 22 ppm of total nitrogen and being brown in color was embedded inside a graphite pill made by pressing high purity graphite powder. The diamond was annealed at ~60 kbars and 2300° C for 10 minutes. The diamond crystal was recovered and visual examination showed that its color had changed to a neon-like yellow-green color. The IR spectrum of the processed diamond under absorption mode showed that the intensity of the platelet peak at 1360 cm-1 had decreased by ~ 65%. There was no change is the concentration of B centers. It also had a high concentration of H3 Centers as determined by the H3 absorption line at 503 nm.

EXAMPLE II

A IaB type natural rough diamond containing platelets as evident by the peak at 1360 cm-1 in infrared(IR) spectrum in absorption mode, weighing 2.17 carats with 24 ppm of total nitrogen and being brown in color was embedded inside a graphite pill made by pressing high purity graphite powder. The diamond was annealed at 60 kbars and 2150° C for 4 minutes. The diamond crystal was recovered and visual examination showed that its color had changed to a neon-like yellow-green color.. The IR spectrum of the processed diamond under absorption mode showed that the intensity of the platelet peak at 1360 cm-1 had decreased by ~ 89%. There was also no change is the concentration of B centers. It also had a high concentration of H3 Centers as determined by the H3 absorption line at 503 nm.

EXAMPLE III

A Type IaA/B natural rough diamond containing platelets as evident by the peak at 1360 cm-1 in infrared(IR) spectrum in absorption mode, weighing 1.85 carats, brown in color and with an A center concentration of 5 ppm and B center concentration of 20 ppm was placed inside a pill made by pressing high purity graphite. The diamond was annealed at ~60 kbars and ~2000° C for 2 minutes. Visual examination of the recovered diamond showed that the color had changed to a pleasing neon greenish-yellow color. The IR spectrum of the processed diamond under absorption mode showed that the intensity of the platelet peak at 1360 cm-1 had decreased by ~ 60%. There was also no change is the concentration of A and B centers. It also had a high concentration of H3 Centers as determined by the H3 absorption line at 503 nm.

EXAMPLE IV

A Type IaAB natural rough diamond containing platelets as evident by the peak at 1360 em-1 in infrared(IR) spectrum in absorption mode, weighing 1.92 carats, brown in color and with an A center concentration of 1 ppm and B center concentration of 37 ppm was placed inside a pill made by pressing high purity graphite. The diamond was annealed at ~60 kbars and ~2125° C for 2 minutes. Visual examination of the recovered diamond showed that the color had changed to a pleasing neon greenish-yellow color. The IR spectrum of the processed diamond under absorption mode showed that the intensity of the platelet peak at 1360 cm-1 had decreased by - 60%. It also had a high concentration of H3 Centers as determined by the H3 absorption line at 503 nm.

**Claims**

1. A method for improving the color of brownish discolored natural diamond, comprising:

   a) placing said brownish discolored natural diamond in a pressure transmitting medium;
   b) consolidating said pressure transmitting medium into a pill;
   c) exposing said pill to elevated pressure and elevated temperature within the graphite stable or diamond stable range of the carbon phase diagram for a time sufficient to improve the color of said diamond; and
   d) recovering said diamond.

2. The method of Claim 1, wherein said brownish discolored natural diamond is a Type IaB, Type IaA/B, Type IaA or Type Ib diamond.

3. The method of Claim 1, wherein said brownish discolored natural diamond is a Type IaB, Type IaA/B, Type IaA or Type Ib diamond with platelets.

4. The method of Claim 1, wherein said brownish discolored natural diamond is a Type IaB with a total nitrogen concentration less than 500 ppm.

5. The method of Claim 1 wherein said brownish discolored natural diamond is Type IaA/B with a total nitrogen concentration less than 500 ppm.

6. The method of Claim 1 wherein said brownish discolored natural diamond is Type IaA with a total nitrogen concentration less than 500 ppm.

7. The method of Claim 1, wherein the recovered diamond is neon yellow-green color.

8. The method of Claim 1, wherein the recovered diamond has yellowish green color.

9. The method of Claim 1 wherein the recovered diamond has greenish yellow color.

10. The method of Claim 1, wherein said elevated temperature ranges from 1500° to 3500°C and said elevated pressure ranges from about 10 to about 100 kilobars.

11. The method of Claim 6, wherein said elevated pressure ranges from 20 to 80 kilobars.

12. The method of Claim 1, wherein said recovered diamond is subjected to step (c) a plurality of times.

13. The method of Claim 1, wherein said pressure transmitting medium is thermally and chemically stable at HP/HT and is selected from the group consisting of a salt, an oxide, or graphite.

14. The method of Claim 2 wherein the final concentration of A Centers is less than 50 ppm.

15. The method of Claim 1 wherein the total concentration of nitrogen is less than 50 ppm.

16. The method of Claim 1 where the final C Center concentration is less than 2 ppm.

17. The method of Claim 9, wherein said pressure transmitting medium is a salt selected from the group consisting of sodium chloride, sodium iodide, sodium bromide, potassium chloride, potassium iodide, potassium bromide, calcium chloride, calcium iodide and calcium bromide.

18. The method of Claim 9, wherein said pressure transmitting medium is selected from the group consisting of magnesium oxide, calcium oxide, and mixtures thereof.

**19.** The method of Claim 9, wherein said pressure transmitting medium is graphite.

**20.** The method of Claim 1, wherein said elevated temperature and elevated pressure are maintained from 30 seconds to 96 hours.

**21.** The method of Claim 1, wherein said elevated temperature and elevated pressure are maintained from 5 minutes to 24 hours.

**22.** The method of Claim 1, wherein said elevated temperature and elevated pressure are maintained from 5 minutes to 1 hour.

**Revendications**

**1.** Un procédé destiné à améliorer la couleur de diamant naturel décoloré brunâtre, comportant :

(a) placer ledit diamant naturel décoloré brunâtre dans un milieu transmetteur de pression ;
(b) consolider ledit milieu transmetteur de pression dans une pilule ;
(c) exposer ladite pilule à une pression élevée et une température élevée dans les limites du domaine de fonctionnement stable de diamant ou de fonctionnement stable de graphite du diagramme de phase de carbone pendant une durée suffisante pour améliorer la couleur dudit diamant ; et
(d) récupérer ledit diamant.

**2.** Le procédé de la revendication 1, dans lequel ledit diamant naturel décoloré brunâtre est un diamant de Type IaB, de Type IaA/B, de Type IaA ou de Type Ib.

**3.** Le procédé de la revendication 1, dans lequel ledit diamant naturel décoloré brunâtre est un diamant de Type IaB, de Type IaA/B, de Type IaA ou de Type Ib à plaquettes.

**4.** Le procédé de la revendication 1, dans lequel ledit diamant naturel décoloré brunâtre est un Type IaB avec une concentration d'azote totale Inférieure à 500 ppm.

**5.** Le procédé de la revendication 1, dans lequel ledit diamant naturel décoloré brunâtre est du Type IaA/B avec une concentration d'azote totale inférieure à 500 ppm.

**6.** Le procédé de la revendication 1, dans lequel ledit diamant naturel décoloré brunâtre est du Type IaA avec une concentration d'azote totale inférieure à 500 ppm.

**7.** Le procédé de la revendication 1, dans lequel le diamant récupéré est de couleur jaune-verte fluo.

**8.** Le procédé de la revendication 1, dans lequel le diamant récupéré est de couleur verte jaunâtre.

**9.** Le procédé de la revendication 1, dans lequel le diamant récupéré est de couleur jaune verdâtre.

**10.** Le procédé de la revendication 1, dans lequel ladite température élevée est comprise dans la gamme allant de 1 500° à 3 500 °C et ladite pression élevée est comprise dans la gamme allant d'environ 10 à environ 100 kilobars.

**11.** Le procédé de la revendication 6, dans lequel ladite pression élevée est comprise dans la gamme allant de 20 à 80 kilobars.

**12.** Le procédé de la revendication 1, dans lequel ledit diamant récupéré est soumis à l'étape (c) une pluralité de fois.

**13.** Le procédé de la revendication 1, dans lequel ledit milieu transmetteur de pression est thermiquement et chimiquement stable à HP/HT et est sélectionné dans le groupe consistant en un sel, un oxyde, ou du graphite.

**14.** Le procédé de la revendication 2, dans lequel la concentration finale de Centres A est inférieure à 50 ppm.

**15.** Le procédé de la revendication 1, dans lequel la concentration totale d'azote est inférieure à 50 ppm.

**16.** Le procédé de la revendication 1, où la concentration finale de Centres C est Inférieure à 2 ppm.

**17.** Le procédé de la revendication 13; dans lequel ledit milieu transmetteur de pression est un sel sélectionné dans le groupe consistant en chlorure de sodium, iodure de sodium, bromure de sodium, chlorure de potassium, iodure de potassium, bromure de potassium, chlorure de calcium, Iodure de calcium et bromure de calcium.

**18.** Le procédé de la revendication 13, dans lequel ledit milieu transmetteur de pression est sélectionné dans le groupe consistant en oxyde de magnésium, oxyde de calcium, et mélanges de ceux-ci.

**19.** Le procédé de la revendication 13, dans lequel ledit milieu transmetteur de pression est du graphite.

**20.** Le procédé de la revendication 1, dans lequel ladite température élevée et ladite pression élevée sont maintenues de 30 secondes à 96 heures.

**21.** Le procédé de la revendication 1, dans lequel ladite température élevée et ladite pression élevée sont maintenues de 5 minutes à 24 heures.

**22.** Le procédé de la revendication 1, dans lequel ladite température élevée et ladite pression élevée sont maintenues de 5 minutes à 1 heure.

**Patentansprüche**

**1.** Ein Verfahren zum Verbessern der Farbe von bräunlich verfärbtem natürlichem Diamanten, das Folgendes beinhaltet:

a) Platzleren des bräunlich verfärbten natürlichen Diamanten in ein Druckfortpflanzungsmedium;
b) Verdichten des Druckfortpflanzungsmediums zu einer Pille;
c) Aussetzen der Pille gegenüber erhöhtem Druck und erhöhter Temperatur innerhalb des stabilen Graphit- oder stabilen Diamantbereichs des Kohlenstoffphasendiagramms über einen Zeitraum, der ausreichend ist, um die Farbe des Diamanten zu verbessern; und
d) Wiedergewinnen des Diamanten.

**2.** Verfahren gemäß Anspruch 1, wobei der bräunlich verfärbte natürliche Diamant ein Diamant des Typs IaB, IaA/B, IaA oder Ib ist.

**3.** Verfahren gemäß Anspruch 1, wobei der bräunlich verfärbte natürliche Diamant ein Diamant des Typs IaB, IaA/B, IaA oder Ib mit flachen Schichten ist.

**4.** Verfahren gemäß Anspruch 1, wobei der bräunlich verfärbte natürliche Diamant ein Typ IaB mit einer Gesamtstickstoffkonzentration von weniger als 500 ppm ist.

**5.** Verfahren gemäß Anspruch 1, wobei der bräunlich verfärbte natürliche Diamant Typ IaA/B mit einer **Gesamtstickstoffkonzentration von weniger als 500 ppm ist.**

**6.** Verfahren gemäß Anspruch 1, wobei der bräunlich verfärbte natürliche Diamant Typ IaA mit einer Gesamtstickstoffkonzentration von weniger als 500 ppm ist.

**7.** Verfahren gemäß Anspruch 1, wobei der wiedergewonnene Diamant eine neongelb-grüne Farbe aufweist.

**8.** Verfahren gemäß Anspruch 1, wobei der wiedergewonnene Diamant eine gelblich-grüne Farbe aufweist.

**9.** Verfahren gemäß Anspruch 1, wobei der wiedergewonnene Diamant eine grünlich-gelbe Farbe aufweist.

**10.** Verfahren gemäß Anspruch 1, wobei die erhöhte Temperatur in dem Bereich von 1500 bis 3500 °C liegt und der erhöhte Druck in dem Bereich von ungefähr 10 bis ungefähr 100 Kilobar liegt.

**11.** Verfahren gemäß Anspruch 6, wobei der erhöhte Druck in dem Bereich von 20 bis 80 Kilobar liegt.

**12.** Verfahren gemäß Anspruch 1, wobei der wiedergewonnene Diamant mehrere Male Schritt (c) unterzogen wird.

**13.** Verfahren gemäß Anspruch 1, wobei das Druckfortpflanzungsmedium bei HPHT thermisch und chemisch stabil ist und aus der Gruppe, die aus einem Salz, einem Oxid oder Graphit besteht, ausgewählt wird.

**14.** Verfahren gemäß Anspruch 2, wobei die Endkonzentration von A-Zentren weniger als 50 ppm beträgt.

**15.** Verfahren gemäß Anspruch 1, wobei die Gesamtkonzentration von Stickstoff weniger als 50 ppm beträgt.

**16.** Verfahren gemäß Anspruch 1, wobei die C-Zentrumsendkonzentration weniger als 2 ppm beträgt.

**17.** Verfahren gemäß Anspruch 13, wobei das Druckfortpflanzungsmedium ein Salz ist, das aus der Gruppe, die aus Natriumchlorid, Natriumiodid, Natriumbromid, Kaliumchlorid, Kaliumiodid, Kaliumbromid, Kalziumchlorid, Kalzium-Iodid und Katziumbromid besteht, ausgewählt wird.

**18.** Verfahren gemäß Anspruch 13, wobei das Druckfortpflanzungsmedium aus der Gruppe, die aus Magnesiumoxid, Kalziumoxid und Gemische von diesen besteht, ausgewählt wird.

**19.** Verfahren gemäß Anspruch 13, wobei das Druckfortpflanzungsmedlum Graphit Ist.

**20.** Verfahren gemäß Anspruch 1, wobei die erhöhte Temperatur und der erhöhte Druck 30 Sekunden bis 96 Stunden lang aufrechterhalten werden.

**21.** Verfahren gemäß Anspruch 1, wobei die erhöhte Temperatur und der erhöhte Druck 5 Minuten bis 24 Stunden lang aufrechterhalten werden.

**22.** Verfahren gemäß Anspruch 1, wobei die erhöhte Temperatur und der erhöhte Druck 5 Minuten bis 1 Stunde lang aufrechterhalten werden.

# FIG.1

# FIG.2